# EUROPEAN PATENT SPECIFICATION

(11) **EP 0 936 720 B1**
(45) Date of publication and mention of the grant of the patent: **18.04.2007**
(21) Application number: 99300897.8
(22) Date of filing: 08.02.1999
(51) Int. Cl.: H02J 7/14, H05B 39/08

(54) **Lamp lighting and battery charging control system for a vehicle**
Lampbeleuchtungs- und Batterieladesteuerungssystem für ein Fahrzeug
Systéme de commande de l'alimentation de lampe et de charge de batterie pour un véhicule

(30) Priority: 12.02.1998 JP 2961098; 05.03.1998 JP 5327398
(43) Date of publication of application: 18.08.1999
(60) Divisional application: 06008454.8
(73) Proprietor: Mitsuba Corporation Co., Ltd., Kiryu-shi, Gunma-ken (JP)
(72) Inventor: Sakano, Tomokazu, Kiryu-shi, Gunma-ken (JP); Suzuki, Takashi, Kiryu-shi, Gunma-ken (JP); Yanase, Atsushi, Sawa-gun, Gunma-ken (JP)
(74) Representative: Rees, Alexander Ellison

(56) References cited:
- EP-A- 0 597 352
- FR-A- 2 742 278
- FR-A- 2 748 870
- US-A- 5 264 761

## Description

### TECHNICAL FIELD

The present invention relates to a lamp lighting and battery charging control system for a vehicle in which an AC voltage from an electric generator which is driven by an internal combustion engine is used to light a lamp as well as to charge a battery.

### BACKGROUND OF THE INVENTION

Conventionally in some of the vehicles such as motorcycles, a voltage having an AC waveform is produced from an electric generator which is driven by an internal combustion engine, and the AC voltage from the generator is used to charge a battery as well as to light a lamp such as a headlamp.

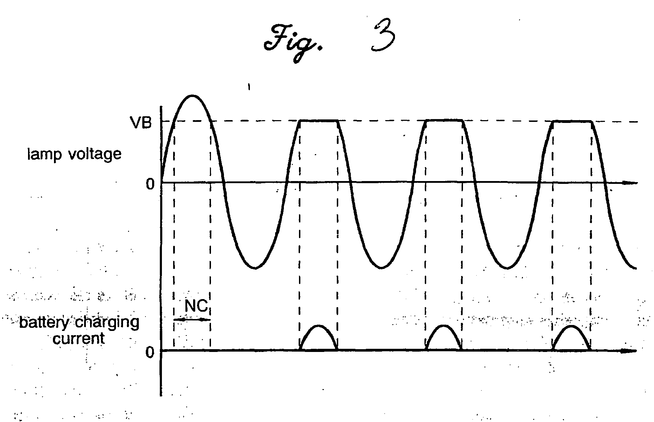

According to one conventional technique to use the AC voltage from the generator in the battery charging and lamp lighting, the full-wave of the AC voltage from the generator is used in lighting the lamp in which when the battery requires charging, only a voltage higher than a prescribed voltage VB is used in charging the battery, as shown in Figure 3. This technique is called a "full-wave" technique. In Figure 3, a period in which the voltage is greater than VB but no charging is required by the battery is indicated by NC. In a system employing the full-wave technique, the battery charging electric current is relatively small and tends to be insufficient for adequately charging the battery when the engine speed is low and hence the AC voltage from the electric generator is small.

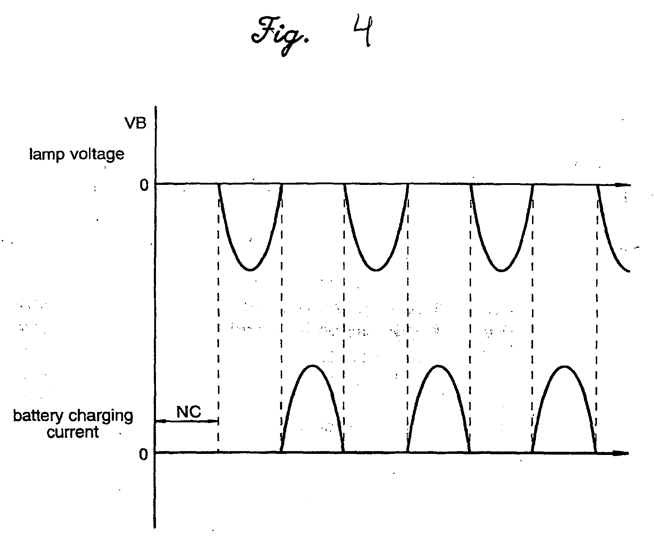

Another conventional technique is known as "half-wave " technique, in which negative half-waves of the AC voltage are used in lighting the lamp while positive half-waves are used in charging the battery, as shown in Figure 4. In a system employing the half-wave technique, the battery charging current can be relatively large, but the negative half-waves of the AC voltage tend to be insufficient for achieving adequate brightness of the lamp. Thus, it has been desired to solve such prior-art problems and achieve both favorable lamp lighting and battery charging even when the engine speed is low.

### BRIEF SUMMARY OF THE INVENTION

In view of the above, a primary object of the present invention is to provide an improved lamp lighting and battery charging control system for a vehicle which can favorably use the electric power produced from the engine-driven electric generator in both lamp lighting and battery charging.

A second object of the present invention is to provide a lamp lighting and battery charging control system for a vehicle in which both the lamp lighting and battery charging can be desirably achieved even when the engine speed is low.

A forth object of the present invention is to provide such a lamp lighting and battery charging control system in a simple and cost-effective manner.

According to the present invention, these and other objects can be accomplished by providing a lamp lighting and battery charging system for a vehicle comprising an electric generator which is driven by an internal combustion engine to generate an AC voltage comprising alternate positive and negative half-waves, a battery operatively connected to the electric generator so that the battery is charged by the AC voltage from the generator, a lamp operatively connected to the electric generator so that the lamp is supplied with electric power from the generator, and a lamp lighting control circuit connected between the electric generator and the lamp, characterized by that: the lamp lighting control circuit operates so that one of the positive and negative half-waves of the AC voltage generated by the electric generator is supplied to the lamp at a rate of in M cycles for every N cycles of the AC voltage, N being a positive integer greater than 1 and M being a positive integer smaller than N, while the other of the positive and negative half-waves of the AC voltage is always supplied to the lamp when it is generated; and the battery is charged by the one of the positive and negative half-waves of the AC voltage from the generator.

Thus, by suitably selecting M and N, it is possible to best balance the characteristics of the conventional full-wave and half-wave techniques, to thereby achieve most effective use of the generated electric power in lamp lighting and battery charging. Particularly when N is equal to 2 and M is equal to 1, the full-wave and half-wave techniques are performed alternately in every other cycle of the AC voltage from the generator. Accordingly the lamp is lighted alternately by a full-wave and a half-wave in every other cycle, ensuring sufficient luminous intensity of the lamp even at low engine speeds, while every other positive half-waves which can be used exclusively in charging the battery can prevent insufficient battery charging at low engine speeds. Typically, the one of the positive and negative half-waves of the AC voltage is a positive half-wave.

Such desirable lamp lighting and battery charging control can be achieved by the lamp lighting control circuit comprising: a first switching device connected between the lamp and the electric generator; a first control circuit which, when activated, operates to turn on the first switching device when the one of the positive and negative half-waves of the AC voltage is generated from the electric generator; and means for activating/deactivating the first control circuit so that the first control circuit is alternately activated and deactivated in every other cycle of the AC voltage. In one embodiment of the present invention, the means for activating/deactivating the first control circuit preferably comprises a flipflop circuit.

The first switching device can be embodied by a triac, and in order to desirably control the triac, the lamp lighting control circuit may further comprise a second control circuit for turning on the triac when the other of the positive and negative half-waves of the AC voltage is generated from the electric generator.

The preferable battery charging control can be achieved by providing a second switching device connected between the battery and the electric generator; and means for controlling the second switching device so as to turn on the second switching device when a voltage across the battery is greater than a prescribed value. In a preferred embodiment, the means for controlling the second switching device operates so as not to turn on the second switching device when the AC voltage from the electric generator is used in lighting the lamp. In such an embodiment, though the battery charging current somewhat reduces, it becomes possible to separate the battery charging and the lamp lighting from each other. This can eliminate sensible fluctuations in luminous intensity of the lamp caused by the battery charging which may randomly take place depending on the charging state of the battery.

The lamp lighting control circuit may operate as above only when an engine speed is lower than a prescribed value, in which such operation is particularly beneficial.

### BRIEF DESCRIPTION OF THE DRAWINGS

Now the present invention is described in the following with reference to the appended drawings, in which:
Figure 1 is a block diagram showing a lamp lighting and battery charging control system for a vehicle according to one embodiment of the present invention;
Figure 2 is a waveform diagram for explaining the operation of the lamp lighting and battery charging control system of Figure 1;
Figure 6 is a waveform diagram for showing one conventional technique to use the electric generator voltage in both lamp lighting and battery charging; and
Figure 7 is a waveform diagram for showing another conventional technique to use the electric generator voltage in both lamp lighting and battery charging.

### DETAILED DESCRIPTION OF THE PREFERRED EMBODIMENTS

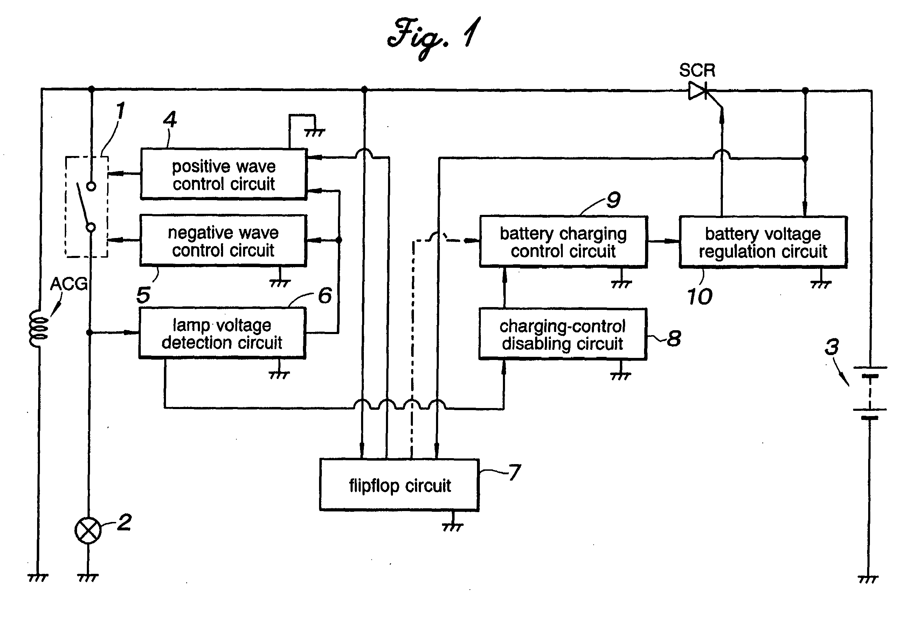

Figure 1 is a block diagram showing a lamp lighting and battery charging control system for a vehicle according to the present invention. As shown in the drawing, an AC voltage generated from an electric generator ACG which is driven by and rotates with an internal combustion engine (not shown) is supplied to a lamp 2 (e.g., a head lamp) through a switching device 1 as well as to a battery 3 through a thyristor SCR.

The switching device 1, which preferably consists of a triac or bidirectional triode thyristor, is controlled (or triggered) by a positive wave control circuit (or a first control circuit) 4 and a negative wave control circuit (or a second control circuit) 5, and when turned on, transmits positive or negative voltages from the generator ACG to the lamp 2. A voltage at a node between the switching device 1 and the lamp 2 is provided to a lamp voltage detection circuit 6 of which output signal is forwarded to both the positive and negative wave control circuits 4, 5.

Thus, the positive and negative wave control circuits 4, 5 operates according to the output signal from the lamp voltage detection circuit 6. The positive wave control circuit 4 is also controlled by a non-inverted output signal from a flipflop circuit 7 which serves as means for activating/deactivating the positive wave control circuit 4. Thus, in this embodiment the triac 1 and the circuits 4, 5, 6 and 7 constitute a lamp lighting control circuit. The flipflop circuit 7 is supplied with the output voltage from the generator ACG and a charging voltage of the battery 3.

Further, the output signal from the lamp voltage detection circuit 6 is provided to a charging-control disabling circuit 8 of which output signal is forwarded to a battery charging control circuit 9, which in turn provides its output to a battery voltage regulating circuit 10. This battery voltage regulating circuit 10 monitors the voltage across the battery 3 and, when detecting a battery voltage below a prescribed value VB, provides the thyristor SCR with a gate signal to turn on the same.

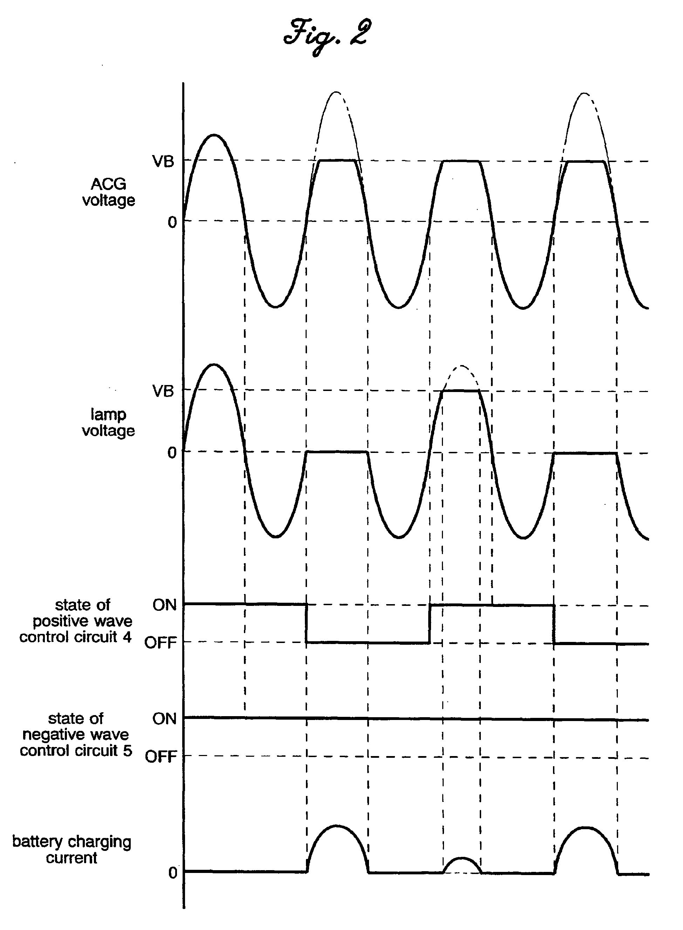

Now, referring to waveforms shown in Figure 2 an operation of the above-constructed lamp lighting and battery charging control system is described hereinafter. As shown in Figure 2, the electric generator ACG produces an AC waveform voltage and, in every other cycle of which the positive wave control circuit 4 is activated (ON) and deactivated (OFF) alternately. It should be noted that the negative wave control circuit 5 is activated all the time.

When the positive wave control circuit 4 is activated, it triggers the switching device 1, which consists of a triac as mentioned above, so that the switching device 1 conducts the positive voltage generated from the generator ACG. Similarly, the always-activated negative wave control circuit 5 functions to allow the negative voltage from the generator ACG to pass through the switching device 1 every time it is generated. Thus, as shown in Figure 2, in the cycle during which the positive wave control circuit 4 is activated, both the positive and negative voltages (i.e., a full-wave voltage) are supplied to the lamp 2, while in the cycle during which the circuit 4 is deactivated, only the negative voltage (i.e., a half-wave voltage) is supplied to the lamp 2. In other words, in this embodiment the full-wave and half-wave control techniques are performed alternately in every other cycle of the AC voltage from the generator ACG.

When it is detected that the voltage across the battery 3 falls below the prescribed value VB, the battery voltage regulating circuit 10 turns on the thyristor SCR. As a result, positive half-waves of the AC voltage from the generator are truncated when the charging of the battery takes place, as shown in the uppermost waveform in Figure 2. As shown in the lowermost waveform, the electric current flowing toward the battery 3 varies depending on whether the generator voltage is used both in lamp lighting and battery charging or only in battery charging. As seen, when no electric current is flowing through the lamp 2, a greater electric current for charging the battery 3 is available. It should be noted that if the battery charging does not take place in the cycle where the positive wave control circuit 4 is deactivated, the generator ACG is rotated with no electrical load and thus the output voltage thereof will be somewhat increased, as shown by phantom lines in the uppermost waveform.

In this way, since the full-wave and half-wave techniques are performed alternately in every other cycle, and hence the lamp is lighted by every other positive half-waves in addition to every negative half-wave of the AC voltage from the generator ACG, it is ensured that sufficient luminous intensity of the lamp 2 is achieved even at low engine speeds. Further, every other positive half-waves which are not used in lighting the lamp 2 and thus can be used exclusively in charging the battery 3 can prevent insufficient battery charging. It should be noted that though in the above preferred embodiment the full-wave control was performed once in every two cycles of the AC voltage from the generator, it may be possible to perform the full-wave control at a rate other than that. Generally, according to the present invention the full-wave control may take place at a rate of in M cycles for every N cycles of the AC voltage from the generator, wherein N is a positive integer greater than 1 and M is a positive integer smaller than N. It should also be noted that M is equal to N in the conventional full-wave technique shown in Figure 6 while M is equal to zero (0) in the conventional half-wave technique shown in Figure 7.

In the above embodiment, the battery charging may take place regardless of whether or not the positive voltage from the generator ACG is being used in lighting the lamp 2. In a second embodiment of the present invention, an inverted output signal of the flipflop 7 is provided to the charging control circuit 9, as shown by a phantom line in Figure 1, so that this signal can be used by the charging control circuit 9 in controlling the battery voltage regulating circuit 10. By using the inverted output from the flipflop 7, the charging control circuit 9 works to prohibit the battery charging when the positive voltage from the generator ACG is used in lighting the lamp 2. The resulting waveforms of the lamp voltage and the battery charging current are shown by phantom lines in Figure 2.

Thus, in this embodiment the full-wave and half-wave techniques are performed-alternately in every other cycle as in the first embodiment, but when the full-wave technique is being performed, the full-wave voltage is used exclusively in lighting the lamp. As a result, though the battery charging current somewhat reduces, it becomes possible to separate the battery charging and the lamp lighting from each other. In other words, it is prevented that the battery charging influences the lamp lighting. This can eliminate sensible fluctuations in luminous intensity of the lamp 2 caused by the battery charging which may randomly take place depending on the charging state of the battery 3. It should be noted that the battery's state of charge can change irregularly due to operations of DC load(s) such as a stop lamp and the like which are connected to the battery.

In the above embodiments, the circuit for activating/deactivating the positive wave control circuit 4 was implemented by the flipflop 7. However it should not be limited to the flipflop 7 so long as the activation/deactivation of the positive wave control circuit 4 is carried out in every other cycle of the AC voltage from the generator ACG. For example, it may be possible to use a CPU instead of the flipflop. Further, the above described control of the switching device 1 may be effected only in a low engine speed range below a prescribed engine speed.

According to one embodiment of the present invention, since the full-wave and half-wave techniques are performed alternately in every other cycle, and hence the lamp is alternately lighted by a full-wave and a half-wave of the AC voltage from the electric generator in every other cycle, it is ensured that sufficient luminous intensity of the lamp is achieved even at low engine speeds. Further, every other positive half-waves which can be used exclusively in charging the battery can prevent insufficient battery charging.

Although the present invention has been described in terms of preferred embodiments thereof, it will be obvious to a person skilled in the art that various alterations and modifications are possible without departing from the scope of the present invention which is set forth in the appended claims. For example, it may be possible to use other switching devices such as transistors or thyristors or combination thereof in place of the triac. Particularly, in the first embodiment of the present invention, the triac 1 can be replaced by a combination of a diode for conducting the negative voltage from the electric generator and a thyristor connected in parallel with the diode for controllably conducting the positive voltage produced from the electric generator. Further, the directions of the thyristor SCR and the battery 3 shown in Figure 1 can be reversed so that the negative voltage from the electric generator is used in charging the battery 3 and the positive voltage is used in lighting the lamp 2. Such modifications should fall within the scope of the present invention defined by the claims.

## Claims

1. A lamp lighting and battery charging system for a vehicle comprising an electric generator (ACG) which is driven by an internal combustion engine to generate an AC voltage comprising alternate positive and negative half-waves, a battery (3) operatively connected to the electric generator (ACG) so that the battery (3) is charged by the AC voltage from the generator (ACG), a lamp (2) operatively connected to the electric generator (ACG) so that the lamp (2) is supplied with electric power from the generator (ACG), and a lamp lighting control circuit (1, 4, 5, 6, 7) connected between the electric generator (ACG) and the lamp (2), **characterized by** that:
the lamp lighting control circuit (1, 4, 5, 6, 7) operates so that one of the positive and negative half-waves of the AC voltage generated by the electric generator (ACG) is supplied to the lamp (2) at a rate of M cycles for every N cycles of the AC voltage, N being a positive integer greater than 1 and M being a positive integer smaller than N, while the other of the positive and negative half-waves of the AC voltage is always supplied to the lamp (2) when it is generated; and
the battery (3) is charged by the one of the positive and negative half-waves of the AC voltage from the generator (ACG).

2. A lamp lighting and battery charging control system for a vehicle according to claim 1, wherein N is equal to 2 and M is equal to 1.

3. A lamp lighting and battery charging control system for a vehicle according to claim 1 or 2, wherein the one of the positive and negative half-waves of the AC voltage is a positive half-wave.

4. A lamp lighting and battery charging circuit for a vehicle according to claim 2, wherein the lamp lighting control circuit (1, 4, 5, 6, 7) comprises:
a first switching device (1) connected between the lamp (2) and the electric generator (2);
a first control circuit (4) which, when activated, operates to turn on the first switching device (1) when the one of the positive and negative half-waves of the AC voltage is generated from the electric generator (ACG); and
means (7) for activating/deactivating the first control circuit (4) so that the first control circuit (4) is alternately activated and deactivated in every other cycle of the AC voltage.

5. A lamp lighting and battery charging control system for a vehicle according to claim 4, wherein the means (7) for activating/deactivating the first control circuit (4) comprises a flipflop circuit (7).

6. A lamp lighting and battery charging control system for a vehicle according to claim 4, wherein the first switching device (1) consists of a triac (1) and the lamp lighting control circuit (1, 4, 5, 6, 7) further comprises:
a second control circuit (5) for turning on the triac (1) when the other of the positive and negative half-waves of the AC voltage is generated from the electric generator (ACG).

7. A lamp lighting and battery charging control system for a vehicle according to claim 4, further comprising:
a second switching device (SCR) connected between the battery (3) and the electric generator (ACG); and
means (8, 9, 10) for controlling the second switching device (SCR) so as to turn on the second switching device (SCR) when a voltage across the battery (3) is greater than a prescribed value.

8. A lamp lighting and battery charging control system for a vehicle according to claim 7, wherein the means (8, 9, 10) for controlling the second switching device (SCR) operates so as not to turn on the second switching device (SCR) when the AC voltage from the electric generator (ACG) is used in lighting the lamp (2).

9. A lamp lighting and battery charging control system for a vehicle according to claim 2, wherein the lamp lighting control circuit (1, 4, 5, 6, 7) operates so that the lamp (2) is alternately supplied with a full-wave and a half-wave of the AC voltage from the generator (ACG) in every other cycle of the AC voltage only when an engine speed is lower than a prescribed value.

## Patentansprüche

1. Lampenbeleuchtungs- und Batterielade-System für ein Fahrzeug, umfassend: einen elektrischen Generator (ACG), der durch eine Verbrennungskraftmaschine angetrieben wird, um eine Wechselstromspannung mit alternierend positiven und negativen Halbwellen zu erzeugen; eine Batterie (3), die betriebsfähig an den elektrischen Generator (ACG) angeschlossen ist, sodass die Batterie (3) durch die Wechselstromspannung vom Generator (ACG) aufgeladen wird; eine Lampe (2), die betriebsfähig an den elektrischen Generator (ACG) angeschlossen ist, sodass die Lampe (2) vom Generator (ACG) mit elektrischem Strom versorgt wird; und eine Lampenbeleuchtungs-Steuerschaltung (1, 4, 5, 6, 7), die zwischen den elektrischen Generator (ACG) und die Lampe (2) geschaltet ist, **dadurch gekennzeichnet, dass**:
die Lampenbeleuchtungs-Steuerschaltung (1, 4, 5, 6, 7) so funktioniert, dass eine der positiven und negativen Halbwellen der vom elektrischen Generator (ACG) erzeugten Wechselstromspannung an die Lampe (2) mit einer Rate von M Zyklen pro N Zyklen der Wechselstromspannung geliefert wird, wobei N eine positive ganze Zahl größer als 1 ist und M eine positive ganze Zahl kleiner als N ist, während die andere der positiven und negativen Halbwellen der Wechselstromspannung immer an die Lampe (2) geliefert wird, wenn sie erzeugt wird; und
die Batterie (3) durch die eine der positiven und negativen Halbwellen der Wechselstromspannung vom Generator (ACG) aufgeladen wird.

2. Lampenbeleuchtungs- und Batterielade-Steuersystem für ein Fahrzeug nach Anspruch 1, wobei N gleich 2 ist und M gleich 1 ist.

3. Lampenbeleuchtungs- und Batterielade-Steuersystem für ein Fahrzeug nach Anspruch 1 oder 2, worin die eine der positiven und negativen Halbwellen der Wechselstromspannung eine positive Halbwelle ist.

4. Lampenbeleuchtungs- und Batterielade-Schaltung für ein Fahrzeug nach Anspruch 2, worin die Lampenbeleuchtungs-Steuerschaltung (1, 4, 5, 6, 7) Folgendes umfasst:
eine erste Schalteinrichtung (1), die zwischen die Lampe (2) und den elektrischen Generator (ACG) geschaltet ist;
eine erste Steuerschaltung (4), die bei Aktivierung so funktioniert, dass sie die erste Schalteinrichtung (1) einschaltet, wenn die eine der positiven und negativen Halbwellen der Wechselstromspannung vom elektrischen Generator (ACG) erzeugt wird; und
Mittel (7) zum Aktivieren/Deaktivieren der ersten Steuerschaltung (4), sodass die erste Steuerschaltung (4) in jedem zweiten Zyklus der Wechselstromspannung alternierend aktiviert und deaktiviert wird.

5. Lampenbeleuchtungs- und Batterielade-Steuersystem für ein Fahrzeug nach Anspruch 4, worin das Mittel (7) zum Aktivieren /Deaktivieren der ersten Steuerschaltung (4) eine Flipflop-Schaltung (7) umfasst.

6. Lampenbeleuchtungs- und Batterielade-Steuersystem für ein Fahrzeug nach Anspruch 4, worin die erste Schalteinrichtung (1) aus einem Triac (1) besteht und die Lampenbeleuchtungs-Steuerschaltung (1, 4, 5, 6, 7) außerdem Folgendes umfasst:
eine zweite Steuerschaltung (5) zum Einschalten des Triacs (1), wenn die andere der positiven und negativen Halbwellen der Wechselstromspannung vom elektrischen Generator (ACG) erzeugt wird.

7. Lampenbeleuchtungs- und Batterielade-Steuersystem für ein Fahrzeug nach Anspruch 4, außerdem Folgendes umfassend:
eine zweite Schalteinrichtung (SCR), die zwischen die Batterie (3) und den elektrischen Generator (ACG) geschaltet ist; und
Mittel (8, 9, 10) zum Steuern der zweiten Schalteinrichtung (SCR), um die zweite Schalteinrichtung (SCR) einzuschalten, wenn eine Spannung an der Batterie (3) größer als ein vorgeschriebener Wert ist.

8. Lampenbeleuchtungs- und Batterielade-Steuersystem für ein Fahrzeug nach Anspruch 7, worin das Mittel (8, 9, 10) zum Steuern der zweiten Schalteinrichtung (SCR) so funktioniert, dass die zweite Schalteinrichtung (SCR) nicht eingeschaltet wird, wenn die Wechselstromspannung vom elektrischen Generator (ACG) zum Leuchten der Lampe (2) benutzt wird.

9. Lampenbeleuchtungs- und Batterielade-Steuersystem für ein Fahrzeug nach Anspruch 2, worin die Lampenbeleuchtungs-Steuerschaltung (1, 4, 5, 6, 7) so funktioniert, dass die Lampe (2) nur dann alternierend mit einer Vollwelle und einer Halbwelle der Wechselstromspannung vom Generator (ACG) in jedem zweiten Zyklus der Wechselstromspannung versorgt wird, wenn eine Motordrehzahl niedriger als ein vorgeschriebener Wert ist.

## Revendications

1. Système d'éclairage de lampe et de charge de batterie pour un véhicule comprenant un générateur électrique (ACG) qui est entraîné par un moteur à combustion interne afin de générer une tension alternative comprenant des demi-ondes alternative positive et négative, une batterie (3) connectée de façon fonctionnelle au générateur électrique (ACG) de sorte que la batterie (3) soit chargée par la tension alternative provenant du générateur (ACG), une lampe (2) connectée de façon fonctionnelle au générateur électrique de sorte que la lampe (2) soit alimentée par l'énergie électrique provenant du générateur (ACG), et un circuit de commande d'éclairage de lampe (1, 4, 5, 6, 7) connecté entre le générateur électrique (ACG) et la lampe (2),
**caractérisé en ce que** :
le circuit de commande d'éclairage de lampe (1, 4, 5, 6, 7) fonctionne de sorte qu'une des demi-ondes positive et négative de la tension alternative générée par le générateur électrique (ACG) soit fournie à la lampe (2) à une fréquence de M cycles tous les N cycles de la tension alternative, N étant un nombre entier positif supérieur à 1 et M étant un nombre entier positif inférieur à N, tandis que l'autre des demi-ondes positive et négative de la tension alternative est toujours fournie à la lampe (2) quand elle est générée ; et
la batterie (3) est chargée par l'une des demi-ondes positive et négative de la tension alternative provenant du générateur (ACG).

2. Système de commande d'éclairage de lampe et de charge de batterie pour un véhicule selon la revendication 1, dans lequel N est égal à 2 et M est égal à 1.

3. Système de commande d'éclairage de lampe et de charge de batterie pour un véhicule selon la revendication 1 ou 2, dans lequel ladite une des demi-ondes positive et négative de la tension alternative est une demi-onde positive.

4. Système de commande d'éclairage de lampe et de charge de batterie pour un véhicule selon la revendication 2, dans lequel le circuit de commande d'éclairage de lampe (1, 4, 5, 6, 7) comprend :
un premier dispositif de commutation (1) connecté entre la lampe (2) et le générateur électrique (ACG) ;
un premier circuit de commande (4) qui, quand il est activé, fonctionne pour faire passer le premier dispositif de commutation (1) sur marche lorsque ladite une des demi-ondes positive et négative de la tension alternative est générée par le générateur électrique (ACG) ; et
des moyens (7) pour activer / désactiver le premier circuit de commande (4) de sorte que le premier circuit de commande (4) soit alternativement activé et désactivé au cours de chaque autre cycle de la tension alternative.

5. Système de commande d'éclairage de lampe et de charge de batterie pour un véhicule selon la revendication 4, dans lequel les moyens (7) pour activer / désactiver le premier circuit de commande (4) comprend une bascule bistable (7).

6. Système de commande d'éclairage de lampe et de charge de batterie pour un véhicule selon la revendication 4, dans lequel le premier dispositif de commutation se compose d'un triac (1) et le circuit de commande d'éclairage de lampe (1, 4, 5, 6, 7) comprend en outre un deuxième circuit dé commande (5) pour passer sur marche le triac (1) quand l'autre des demi-ondes positive et négative de la tension alternative est générée par le générateur électrique (ACG).

7. Système de commande d'éclairage de lampe et de charge de batterie pour un véhicule selon la revendication 4, comprenant en outre :
un second dispositif de commutation (SCR) connecté entre la batterie (3) et le générateur électrique (ACG) ; et
des moyens (8, 9, 10) pour commander le second dispositif de commutation (SCR) afin de faire passer le deuxième dispositif de commutation (SCR) sur marche quand une tension à travers la batterie (3) est supérieure à une valeur prescrite.

8. Système de commande d'éclairage de lampe et de charge de batterie pour un véhicule selon la revendication 7, dans lequel les moyens (8, 9, 10) permettant de commander le second dispositif de commutation (SCR) fonctionnent afin de ne pas faire passer le second dispositif de commutation (SCR) sur marche quand la tension alternative provenant du générateur électrique (ACG) est utilisée pour éclairer la lampe (2).

9. Système de commande d'éclairage de lampe et de charge de batterie pour un véhicule selon la revendication 2, dans lequel le circuit de commande d'éclairage de lampe (1, 4, 5, 6, 7) fonctionne de sorte que la lampe (2) soit alimentée en alternance par une pleine onde et une demi-onde de la tension alternative provenant du générateur (ACG) au cours de chaque autre cycle de la tension alternative seulement quand une vitesse du moteur est inférieure à la valeur prescrite.
